Europäisches Patentamt

European Patent Office

Office européen des brevets

(19)

(11) Publication number: **0 145 331**
A2

(12) **EUROPEAN PATENT APPLICATION**

(21) Application number: 84307931.0

(22) Date of filing: 15.11.84

(51) Int. Cl.⁴: **G 11 B 5/53**, G 11 B 5/588

(30) Priority: 15.11.83 JP 215488/83
21.11.83 JP 218911/83
29.11.83 JP 224716/83

(43) Date of publication of application: 19.06.85
Bulletin 85/25

(84) Designated Contracting States: DE FR GB

(71) Applicant: Matsushita Electric Industrial Co., Ltd., 1006,
Oaza Kadoma, Kadoma-shi Osaka-fu, 571 (JP)

(72) Inventor: Inaji, Toshio, 5-1-7 Niina, Mino-shi
Osaka-fu 562 (JP)
Inventor: Okamoto, Hiroshi, 3-1825-58, Syoyodai,
Nara-shi Nara-ken 630 (JP)
Inventor: Yokobori, Nobuyoshi, 1-4-20-307, Shinmori
Asahi-ku, Osaka-shi Osaka-fu 535 (JP)

(74) Representative: Crawford, Andrew Birkby et al, A.A.
THORNTON & CO. Northumberland House 303-306 High
Holborn, London WC1V 7LE (GB)

(54) **Rotary head deflection apparatus.**

(57) A rotary head deflection apparatus for allowing mag-
netic heads (2, 3) to properly scan signal tracks recorded on
a magnetic tape, and used for a helical scan system video
tape recorder, which is constituted of driving coils (8a, 8b)
wound onto a stator (9) and movable members (4, 5) carry-
ing the magnetic heads (2, 3) and magnets (6a, 6b, 7a, 7b)
so that when the driving coils (8a, 8b) are energised, the
magnetic heads (2, 3) are displaced in a direction parallel
to the axis of rotation of a rotary drum (1).

EP 0 145 331 A2

## Rotary head deflection apparatus

This invention relates to a rotary head deflection apparatus which is adapted to displace rotary magnetic heads axially to properly scan the signal tracks recorded on a magnetic tape and is effectively usable for a rotary head type video tape recorder of a helical scan system.

Recently, with growing demand for high density recording and reproduction by a recording medium, in order to realize high density recording and reproduction by means of the magnetic tape, an attempt has been made to carry out tracking control with respect to the magnetic heads. In a case where the magnetic heads are displaced and driven under operation of a tracking control system and properly scan the recording tracks on the magnetic tape for realizing high density recording and reproduction, even when the video tape recorder is in all tape speed play condition, such as fast motion, still and slow motion reproduction modes, such effect is obtained that the reproduced images are free from noise bars or the like.

Conventionally, the system of displacing the rotary magnetic heads as abovementioned is that the magnetic heads are mounted , for example, on a bimorph type piezoelectric element to thereby utilize the electric-to-mechanical characteristic thereof to displace the magnetic heads. The bimorph type piezoelectric element has hysteresis due to the property of material and is insufficient in the mechanical strength. Thus, the element, when intended to be displaced in greater amplitude, involves danger of being broken and moreover the characteristic changes with the lapse of time. Accordingly, it is difficult to construct a rotary head deflection apparatus of durability and stability. Furthermore, since this system should drive the piezoelectric element by electric signals including the positional change information after the signals are transmitted to a rotary unit, the transmission of signals from the stationary unit to the rotary unit requires electrically conductive slip rings and brushes, thereby having created a problem in that the system becomes complicated in construction. Also, usually high voltage of several hundreds volts is required to displace in the desired pitch the piezoelectric element and a high voltage generating circuit is required for driving the piezoelectric element, whereby the system is defective in a high manufacturing cost.

The conventional rotary head deflection apparatus such that the magnetic heads are mounted on the bimorph type piezoelectric element, when displaced in greater amplitude, cannot hold the magnetic heads in position perpendicular to the surface of magnetic tape, thereby generating in the magnetic heads the so-called flapping. As a result, the conventional rotary head deflection apparatus has been defective in that when the magnetic heads are displaced in greater amplitude, reproducing output voltage attenuates to lead to deterioration of picture quality.

Other than the abovementioned rotary head deflection apparatus for displacing the rotary magnetic heads, many apparatus have been proposed which apply, for example, an electromagnetic force. This kind of electromagnetic rotary head deflection apparatus has the durability and is stable in operation in comparison with the rotary head deflection apparatus utilizing the electric-to-mechanical characteristic
of piezoelectric element.  On the contrary, the
apparatus has not been practical because the power
becomes considerably larger which is necessary to
displace the magnetic heads in a required magnitude
in the direction of the axis of rotation.

SUMMARY OF THE INVENTION

An object of the invention is to provide a
rotary head deflection apparatus which is adapted
to vertically displace     rotary magnetic heads so
as to enable proper scanning on signal tracks recorded
on a magnetic tape and which is simple in construction
and effectively usable for a helical scan system video
tape recorder.

This                          rotary head deflection apparatus        controls control currents flowing in first and second driving coils disposed at the
stationary portion on a concentric circle with the
axis of rotation of a rotary member to thereby
utilize an electromotive force to enable reliable
displacement of magnetic heads mounted on movable
members  in the direction of the axis of rotation
of the rotary member.

Furthermore,  the natural frequency depending on the whole
mass of movable members to which the magnetic heads are
fixed and the spring constant of an elastic support member for supporting the movable members is set in the vicinity of the basic frequency component of the rotary path, thereby enabling the power necessary for displacing the magnetic heads to be reduced to a minimum. Especially, in a case where an electromagnetic conversion system of magnets mounted on the movable members and of driving coils disposed in a stator is used as a driving force applying means for the magnetic heads , the rotary head deflection apparatus of the invention requires no slip rings or brushes, thereby being more advantageous than the conventional apparatus using the slip rings or brushes. Specifically, no electric noise is generated; the rotation of each magnetic head is not subjected to an excessive load ; a long life span is expected; and a particular high voltage generating circuit used in the rotary head deflection apparatus utilizing the electric-to-mechanical characteristic of piezoelectric element is not required.

Also, the rotary head deflection apparatus of the invention can independently control an amount of displacement of each of a pair of magnetic heads in the direction of the axis of rotation, so that each magnetic head can be displaced independently of each other so as to have the optimum rotary path less in vibration and power consumption.
In other words,          a rotary head reflection apparatus of high efficiency can be realized.

Furthermore, since the movable members carrying the magnetic heads are supported to the rotary member through two leaf springs fixed to the upper and lower end faces of .the movable members, the magnetic heads are displaced always perpendicularly with respect to the surface of magnetic tape, whereby contact pressure of each magnetic head on the tape is kept constant to obtain the stable reproducing output voltage.

Other objects and features of the invention will become apparent from the following description of the embodiment with reference to the accompanying drawings.

BRIEF DESCRIPTION OF THE DRAWINGS

Fig. 1 is a sectional view of an embodiment of a rotary head deflection apparatus of the invention, housed in a rotary cylinder.

Fig. 2 is a plan view of the Fig. 1 embodiment when viewed from the top.

Fig. 3 is a perspective exploded view of the same.

Fig. 4 is an illustration of operation of the same.

Figs. 5-(a), -(b) and - (c) and    sectional views of the principal portion, explanatory of displacement of magnetic heads at the rotary head deflection apparatus of the invention.

Fig. 6 is a waveform chart showing the rotary path of magnetic head.

Fig. 7 is a graph of the characteristic showing an example of the relation between the mean consuming  power of the rotary head deflection apparatus of the invention and the natural frequency of each movable member.

DESCRIPTION OF THE PREFERRED EMBODIMENTS

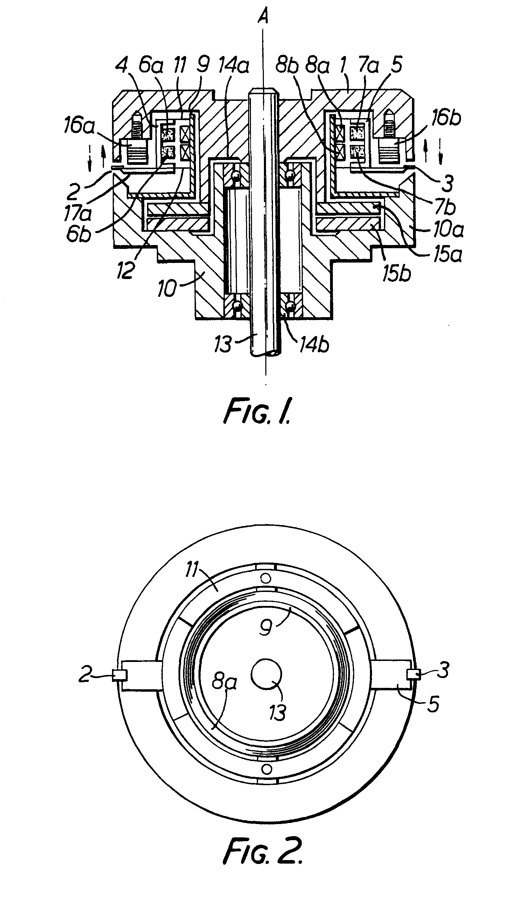

Referring to Figs.  1 and 2, reference numeral 1 designates a usual rotary drum, on the outer periphery of which  a  magnetic tape is wound, the rotary drum 1 comprising a rotary body rotated by a motor (not shown) around the axis A of rotation, and 2 and 3 designate magnetic heads, which are mounted on movable members 4 and 5 displaceable in the direction of the axis of rotation and are displaceable in the direction of the same, i.e., in the directions of the arrows of     dotted line and solid line.

Reference numerals 6a, 6b, 7a and 7b designate magnets fixed to the movable members 4 and 5 and magnetized radially with respect to the axis A of rotation, and 10 designates a stationary portion of a rotary cylinder, which constitute in part a stationary drum 10a.

Reference numeral 9 designates a cylindrical stator,  around which first and second driving coils 8a and 8b are wound, the stator 9 being fixed to a stationary portion 10 and positioned to be coaxial with the axis A of rotation, and 11 and 12 designate ring-like-shaped leaf springs used as elastic support members, the movable members 4 and 5 being supported to the rotary member 1 through the leaf springs 11 and 12 in relation of being displaceable only axially of rotary member 1.

The first and second magnets 6a, 7a, 6b and 7b mounted on the movable members 4 and 5 are disposed to be opposite at the magnetized faces to the first and second driving coils 8a and 8b wound onto the stator 9 and spaced at the predetermined gaps from the coils 8a and 8b respectively.  Reference numeral 13 designates a rotary shaft supported by bearings

0145331

14a and 14b provided at a boss of stationary portion 10, 15a and 15b designate a rotar and a stator of a rotary transformer which properly transfer signals to the magnetic heads 2 and 3, and 16a and 16b designate head position detecting coils for detecting the displacement amount of each magnetic head, the coil faces of coils 16a and 16b being opposite to conductive head base members 17a and 17b keeping the predetermined gaps therefrom respectively.

This kind of position detection method applies the principle that a high frequency current flows in the head position detection coils 16a and 16b to generate therearound AC magnetic fields, and when the conductive head base members 17a and 17b approach the magnetic fields, and an eddy current is generated at each head base member, so that impedance of the respective head position detecting coils 16a and 16b changes. The head position detecting coils 16a and 16b detect the positions of magnetic heads 2 and 3 to thereby position-control the head deflection apparatus under the proper dumping. In addition, connecting wires from the magnetic heads 2 and 3 to the rotor 15a at the rotary transformer, lead wires from the stator 15b at the same, and lead wires for feeding control currents to the driving coils 8a and 8b, are not shown.

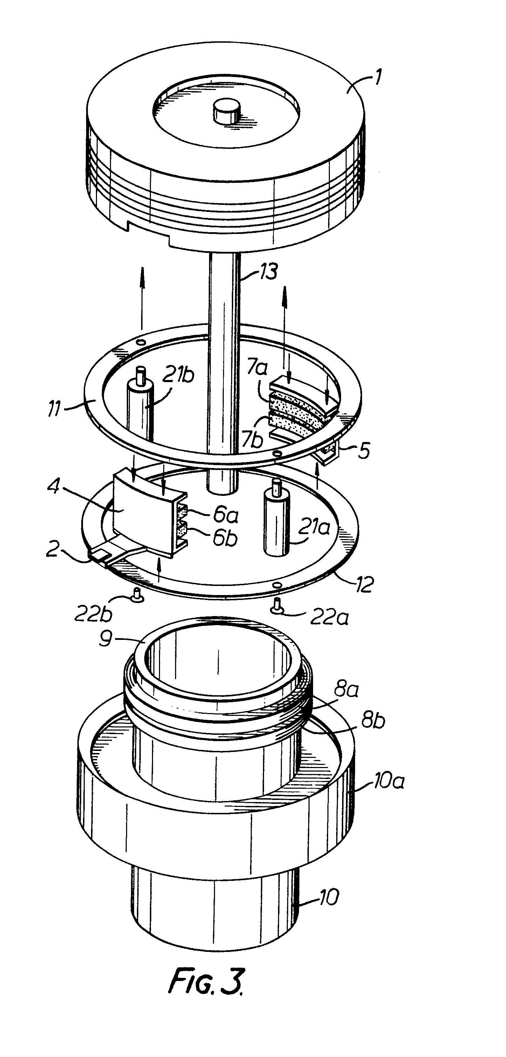

Referring to Fig. 3, the components corresponding to those in Figs. 1 and 2 are designated by the same reference numerals and duplicate description is omitted herein.

In Fig. 3, reference numerals 21a and 21b designate mounting spacers for mounting the leaf springs 11 and 12 onto the rotary body 1, and 22a and 22b designate spring mounting screws for mounting the leaf spring 12 onto the mounting spacers 21a and 21b.

The spring mounting spacers 21a and 21b and spring mounting screws 22a and 22b, mount on the rotary member 1 the leaf springs 11 and 12 carrying the movable members 4 and 5 respectively.

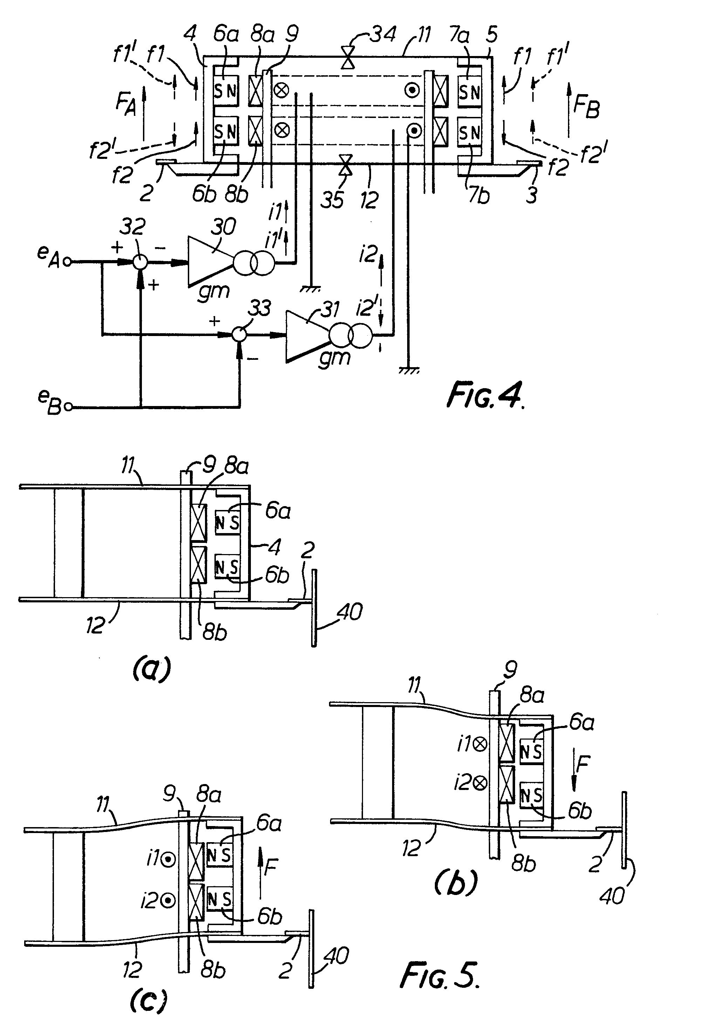

Referring to Fig. 4, the operational principle of the embodiment is shown, in which the components corresponding to those in Figs. 1, 2 and 3 are designated by the same reference numerals and duplicate description is omitted herein. In Fig. 4, reference numerals 30 and 31 designate drive circuits for feeding control currents to the first and second driving coils 8a and 8b respectively, 32 designates an adder, and 33 designates a subtracter, which are given input commands $\ell_A$ and $\ell_B$ respectively, and

0145331

34 and 35 designate the fixed points for mounting the leaf springs 11 and 12 onto the rotary member L.

Next, explanation will be given on operation of the apparatus with reference to Fig. 4.

In Fig. 4, the first magnet 6a and the second magnet 6b mounted on the movable member 4 are of the same N poles at the magnetized faces opposite to the first and second driving coils 8a and 8b, and the first magnet 7a and the second magnet 7b mounted on the movable member 5 are of N pole and S pole at the magnetized faces opposite to the first and second driving coils 8a and 8b respectively.

At first, in a case where control currents $i_1$ and $i_2$ flow in the driving coils 8a and 8b in the directions of the solid arrows in the drawing, the first magnet 6a and second magnet 6b fixed to the movable member 4 generate the upwardly driving forces respectively, in which the driving forces are represented by $f_1$ and $f_2$, the movable member 4 is subjected to the driving force $f_1 + f_2$ to move the movable member 4 upwardly.

On the other hand, the first magnet 7a fixed to the movable member 5 is subjected to the upward driving force $f_1$ and the second magnet 7b to the downward driving force $f_2$, whereby the movable

member 5 is subjected to a driving force $f_1 - f_2$.
Now, assuming that the driving forces $f_1$ and $f_2$
generated on both the members 4 and 5 are equal in
magnitude to each other and a relational expression
$f_1 = f_2$ should hold, the movable member 4 is subjected
to a driving force $2f_1$ and that 5 to no driving force.
As a result, in a case where the control currents $i_1$
and $i_2$ flow in the first and second driving coils 8a
and 8b in the direction of the solid arrows in Fig. 4
to thereby equalize the driving forces $f_1$ and $f_2$
acting on the first and second magnets 7a and 7b, the
movable member 4 only moves upwardly, but that 5 is
kept stationary.

Next, explanation will be given on a case where
the control current $i_1$ flowing in the first driving
coil 8a is not changed in the flowing direction, but
the control current $i_2$ flowing in the second driving
coil 8b only is switched in the flowing direction as
shown by the dotted arrows in Fig. 4, thereby flow-
ing control currents $i_1'$ and $i_2'$ in the first and
second driving coils 8a and 8b. In this case, the
first magnet 6a fixed to the movable member 4 is
subjected to the upward driving force $f_1'$ and the
second magnet 6b to the downward driving force $f_2'$,
whereby the movable member 4 is subjected to a

driving force $f_1' - f_2'$.

On the other hand, the first magnet 7a and second magnet 7b fixed to the movable member 5 generate the upward driving forces $f_1'$ and $f_2'$ respectively, whereby the movable member 5 is subjected to an upward driving force $f_1' + f_2'$ as a whole.

Now, when we assume that the generated driving forces $f_1'$ and $f_2'$ are equal in magnitude and the relational expression $f_1' = f_2'$ should hold, the movable member 4 is not subjected to the driving force and that 5 to the upward driving force $2f_1'$. As a result, in a case where the control currents $i_1'$ and $i_2'$ flow in the first and second driving coils 8a and 8b in the direction of the dotted arrows in Fig. 4, the movable member 4 is kept stationary, but that 5 only moves upwardly.

The first and second driving coils 8a and 8b are given the control currents $i_1$ and $i_2$ from the drive circuits 30 and 31. The adder 32 and subtracter 33 displace the first and second movable members 4 and 5 corresponding to $\ell_A$ and $\ell_B$.

Next, explanation will be given on operations of the adder 32 and subtracter 33 with reference to Fig. 4.

When forces acting on the movable members 4 and 5 are represented by $F_A$ and $F_B$, the force $F_A$ on the movable member 4 is given in the following equation:

$$F_A = n \cdot i_1 \cdot B \cdot S + n \cdot i_2 \cdot B \cdot S$$
$$= n \cdot B \cdot S(i_1 + i_2) \qquad \ldots\ldots\ldots (1),$$

where n is the number of turns per unit height of first and second driving coils, B is magnetic flux generated by the first magnets 6a and 7a and second magnets 6b and 7b, across the magnets and stator 9, and S is the magnet opposite area of the first and second magnets opposite to the first and second driving coils respectively.

Similarly, the force $F_B$ acting on the second movable member 5 is given in the following equation:

$$F_B = n \cdot i_1 \cdot B \cdot S - n \cdot i_2 \cdot B \cdot S$$
$$= n \cdot B \cdot S(i_1 - i_2) \qquad \ldots\ldots\ldots (2).$$

As seen from Fig. 4, the following relational equations between the displacement inputs $\ell_A$ and $\ell_B$, and the control currents $i_1$ and $i_2$ should hold:

$$i_1 = g_m \, (\ell_A + \ell_B) \qquad \ldots\ldots\ldots (3), \text{ and}$$
$$i_2 = g_m \, (\ell_A - \ell_B) \qquad \ldots\ldots\ldots (4),$$

where $g_m$ represents mutual conductance of drive circuits 30 and 31.

When the equations (1) and (2) are changed by use of equations (3) and (4), the following equations

will be obtained:

$$F_A = n \cdot B \cdot S \left\{ g_m \left( \ell_A + \ell_B \right) + g_m \left( \ell_A - \ell_B \right) \right\}$$
$$= 2 \cdot n \cdot B \cdot S \cdot g_m \cdot \ell_A \qquad \dots \dots (5)$$
$$F_B = n \cdot B \cdot S \left\{ g_m \left( \ell_A + \ell_B \right) - g_m \left( \ell_A - \ell_B \right) \right\}$$
$$= 2 \cdot n \cdot B \cdot S \cdot g_m \cdot \ell_B \qquad \dots \dots (6)$$

As seen from the equation (5) and (6), the command input $\ell_A$ can independently control the driving force $F_A$ of first movable member 4 and that $\ell_B$ can similarly control the driving force $F_B$ of second movable member 5.

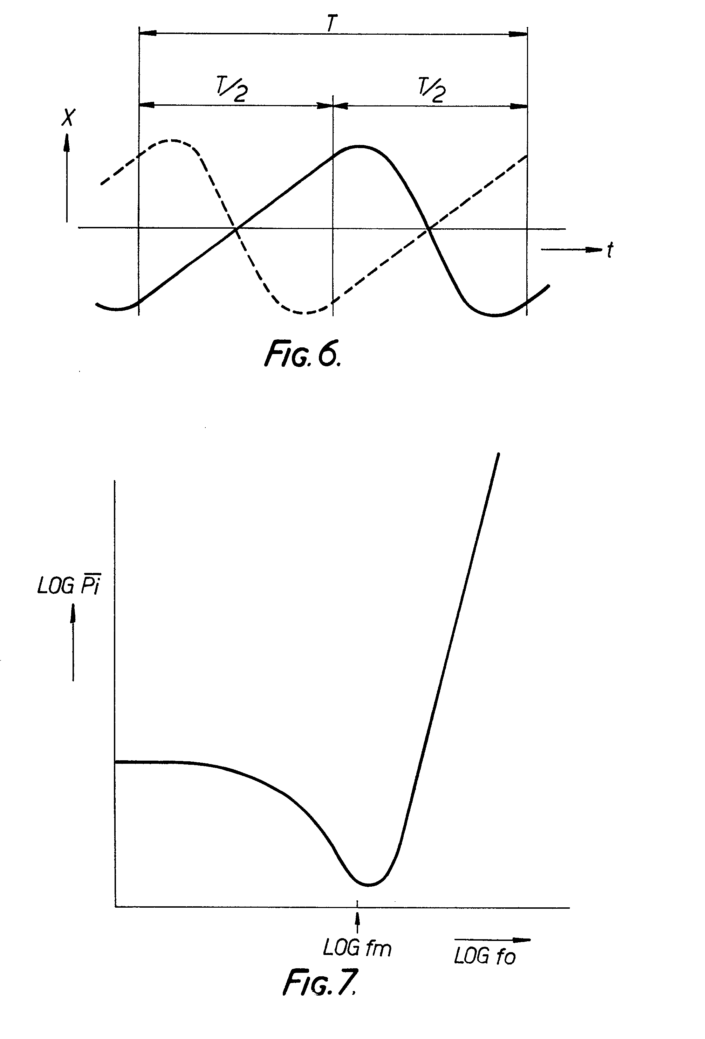

The principal portion of the magnetic head in the rotary head deflection apparatus of the invention will be detailed in Fig. 5, in which the components corresponding to those in Figs. 1, 2 and 3 are designated by the same references. Reference numeral 40 designates a magnetic tape.

Fig. 5-(a) shows the first and second driving coils 8a and 8b in condition of giving thereto no control current, in which the gap surface of magnetic head 2 is in contact perpendicularly with the surface of magnetic tape.

Figs. 5-(b) and -(c) show the displacements of magnetic head 2 when the control currents $i_1$ and $i_2$ flow in the first and second driving coils 8a and 8b in the directions of the arrows F respectively.

In Fig. 5-(b), the first and second magnets 6a and 6b are subjected to both the downwardly driving forces. Hence, the composite driving force F acts downwardly to displace the movable member 4 carrying the magnetic heads 2 until the movable member 4 balances with restoring forces of leaf springs 11 and 12 constituting the elastic support member.

Similarly, in Fig. 5-(c), the driving forces acting on the first and second magnets 6a and 6b both act upwardly on the magnetic heads 2 so that the magnetic heads 2 are displaced upwardly. As seen from Figs. 5-(b) and -(c), since the magnetic head 2 is displaced while being kept perpendicular to the surface of magnetic tape 40, the gap surface of magnetic tape 2 is in proper contact with the surface of magnetic tape 2, thereby making contact pressure always constant.

As a result, in the rotary head deflection apparatus of the invention, even when the magnetic heads are displaced in the direction of axis of rotation, the flapping is not generated in the magnetic heads and the reproducing output voltage is not attenuated. In addition, although the magnetic head 2 mounted on the movable member 4 is described in Fig. 5, the magnetic head 3 mounted on the movable member 5 is similar to the above.

Next, explanation will be given on power consumption, when the rotary head deflection apparatus is driven, by use of the following equations.

When the mass of movable member is represented by m [ g ] and the spring constant of elastic support member by k [ dyne/cm ], the equation of motion of movable member is given as follows:

$$F = K_f \cdot i_a = m \cdot \alpha + k \cdot x = m\{\alpha + (2\pi f_o)^2 x\} \quad \dots \quad (7),$$

where $K_f$ [ dyne/A ] : thrust constant of rotary head reflection apparatus, $\alpha$ [ cm/sec$^2$ ] : acceleration, x [ cm ] : displacement amount, $i_a$ [ A ] : driving current, and $f_o$ [ Hz ] : natural frequency of $f_o = \frac{1}{2\pi}\sqrt{\frac{k}{m}}$ depending on the mass m of movable member and spring constant k of elastic support member. In addition, viscous resistance is omitted from the equation (7) for simplification. Also, power $P_i$ [ W ] necessary to drive the rotary head deflection apparatus to an extent of one head is given in the following equation:

$$P_i = 2 \cdot (K_a \cdot \mathcal{U} + R_a \cdot i_a) \cdot i_a \qquad \dots \dots \dots (8)$$

where $K_a$ [ V/cm/sec ] is the constant of electric generation for the rotary head deflection apparatus, $\mathcal{U}$ [ cm/sec ] is the moving speed of movable member, and $R_a$ [ $\Omega$ ] is a winding resistance of driving coil.

Eliminating $i_a$ from the equations (7) and (8), power $P_i$ is given in the following equation (9):

$$P_i = \frac{2m \cdot K_a}{K_f} \{ \nu \cdot \alpha + (2\pi f_0)^2 \nu \cdot x \}$$

$$+ \quad 2m^2 \frac{R_a}{K_f^2} \{ \alpha + (2\pi f_0)^2 x \}^2 \quad \dots\dots\dots (9).$$

When the mean consumptive power $\bar{P}_i$ [ W ] is obtained from the equation (9) and rearranged by use of the relational expressions $\alpha = \frac{d\nu}{dt}$ and $\nu = \frac{dx}{dt}$, $\bar{P}_i$ is given in the following equation:

$$\bar{P}_i = \frac{1}{T} \int_0^T P_i \cdot dt \quad \text{(T: Cycle period)}$$

$$= 2 \cdot m^2 \cdot \frac{R_a}{K_f^2} \cdot \frac{1}{T} \int_0^T \{ \alpha + (2\pi f_0)^2 \cdot x \}^2 dt$$

$$\dots\dots\dots (10)$$

$$( \because \int_0^T \nu \cdot \alpha \, dt = 0, \quad \int_0^T \nu \cdot x \, dt = 0).$$

In other words, the natural frequency $f_0$ of movable member and the rotary path $(x, \alpha)$ of magnetic head at the rotary head deflection apparatus are decided, the mean consumptive power $\bar{P}_i$ is obtainable from the equation (10)

Fig. 6 is a graph showing the rotary path of magnetic head during, for example, still reproduction, in which the axis of ordinate represents the amount of displacement of magnetic head in the direction of axis of rotation, and the axis of abscissa, the time. In Fig. 6, the rotary path of one magnetic head (to be hereinafter called the A head) is shown by the solid line and that of the other magnetic head (to be hereinafter called the B head) by the dotted line. The cycle period $T \lceil \text{sec} \rceil$ of rotary path, when the rotational speed of the rotary member carrying the magnetic head is represented by $f_m \lceil \text{Hz} \rceil$, has a relation of $T = \frac{1}{f_m}$ with the rotational speed, whereby the basic frequency component of rotary path of the magnetic head is $f_m \lceil \text{Hz} \rceil$.

In the rotary path of A head, the initial straight line (a time period of $\frac{T}{2}$) shows the A head in tracking the recorded tracks on the magnetic tape. Next, in the latter half of cycle period, while the B head instead of A head is tracking the recorded tracks on the magnetic tape, the A head is restored to the subsequent tracking start position.

Fig. 7 is a graph of plotting the mean consumptive power $\bar{P}_i$ when the rotary head deflection apparatus of the invention is driven in the rotary path shown in Fig. 6. In Fig. 7, the axis of abscissa represents the natural frequency $f_o$ of movable member supported to the elastic support member.

As seen from Fig. 7, when the natural frequency $f_o$ of movable member is set in the vicinity of rotational speed $f_m$ of the rotary member, the mean consumptive power $\bar{P}_i$ becomes minimum.

The still reproduction state has been described as the above, but even in other tape speed play states, the basic frequency component of rotary path of magnetic head, is $f_m$ [ Hz ] as the same as in the still reproduction condition, so that when the natural frequency $f_o$ [ Hz ] of movable member is set in the vicinity of the rotational speed $f_m$ [ Hz ] of rotary member, the mean consumptive power $\bar{P}_i$ similarly becomes minimum.

While an embodiment of the invention has been shown and described, the invention is not limited to the specific construction thereof, which is merely exemplary in the specification rather than defined.

CLAIMS:

1. A rotary head deflection apparatus comprising:

first and second movable members (45) supported on a rotary member (1) and capable of being displaced in a direction parallel to the axis of rotation (A) of said rotary member (1), and carrying magnetic heads (2,3) and magnets (6a, 6b, 7a, 7b) respectively;

a stator (9) disposed adjacent the axis of rotation (A) of or on a concentric circle with said rotary member (1), and wound with at least first and second driving coils (8a,8b) having predetermined gaps with respect to surfaces of said magnets (6a,6b,7a,7b) respectively; and

a control circuit (Figure 4) for feeding a control current to said first and second driving coils (8a,8b) whereby to cause said magnetic heads (2,3) to deflect corresponding to said control current and in a direction parallel to the axis of rotation of said rotary member (1).

2. A rotary head deflection apparatus according to claim 1, wherein one of said first and second movable members (4,5) on which said magnetic heads (2,3) and said magnets (6a,6b,7a,7b) are disposed, is so constructed that the surfaces of said magnets on said one member opposite to said first and second driving coils (8a,8b) are homopolar to each other, the other of said movable members (4,5) being so constructed that the surfaces of said magnets on said other member are heteropolar to each other.

3. A rotary head deflection apparatus as set forth in claim 1 or 2, wherein said first and second movable members (4,5) are mounted on said rotary member (1) through resilient support members (11,12), and the surfaces of said magnets fixed to said movable members are adapted to be opposite to said first and second driving coils

(8a,8b) wound onto said stator (9), keeping the predetermined gaps with respect to said first and second driving coils (8a,8b).

4.    A rotary head deflection apparatus as set forth in claim 1,2 or 3, wherein the natural frequency of each of said movable members (4,5) supported by said elastic support members (11,12) is set in proximity to the rotary frequency of said rotary member (1).

5.    A rotary head deflection apparatus as set forth in claim 1,2,3, or 4, wherein said first and second movable members (4,5) are mounted on said rotary member through two resilient plate-like-shaped support members (11,12) fixed to the upper and lower end faces of said movable members respectively, thereby being supported by said rotary member (1) for displacement in a direction parallel to the axis of rotation of said rotary member (1).

6.    A rotary head deflection apparatus as set forth in any one of the preceding claims, wherein said magnets (6a,6b,7a,7b) are magnetised on the same magnetic material respectively.

7.    A rotary head deflection apparatus as set forth in any one of the preceding claims, wherein said control circuit for feeding a control current to said first and second driving coils comprises: first and second drive circuits for feeding to said first and second driving coils control currents corresponding to an input of said control circuit; an adder connected at the output side with one of said first and second drive circuits and given two inputs of two system electric signals including the positional change informations of said first and second magnetic heads; and a subtracter connected at the output side with the other of said first and second drive circuits and given two inputs of two system electric signals including the positional change informations of said first and second magnetic heads, so that said first and second magnetic heads are adapted to deflect independently of each other in the direction of the axis of rotation of said rotary member.

0145331

1/4

*Fig. 1.*

*Fig. 2.*

0145331

FIG.3.

0145331

**Fig.4.**

**Fig.5.**

(a)

(b)

(c)

4/4

0145331

FIG.6.

FIG.7.